# EUROPÄISCHE PATENTSCHRIFT

(11) **EP 0 988 917 B1**
(45) Veröffentlichungstag und Bekanntmachung des Hinweises auf die Patenterteilung: **20.08.2003**
(21) Anmeldenummer: 98118272.8
(22) Anmeldetag: 26.09.1998
(51) Int. Cl.: B23K 26/02

(54) **Verfahren zum Verbinden von Bauteilen durch Laserschweissen**
Workpiece connecting method using a laser
Méthode d'assemblage d'éléments par laser

(43) Veröffentlichungstag der Anmeldung: 29.03.2000
(73) Patentinhaber: SIEMENS AKTIENGESELLSCHAFT, 80333 München (DE)
(72) Erfinder: Altenburg, Klaus, Dr.-Ing., 52146 Würselen (DE); Zimmermann, Michael, Dipl.-Ing., 52066 Aachen (DE)

(56) Entgegenhaltungen:
- EP-A- 0 937 841
- GB-A- 2 261 621
- US-A- 3 182 988
- ROLAND WAHL: "Fehlertolerantes Laserschweissen von Tiefziehteilen" BÄNDER, BLECHE, ROHRE, Bd. 32, Nr. 2, 1991, Seiten 45-49, XP000195098 Würzburg ( DE )

## Beschreibung

Die Erfindung betrifft ein Verfahren zum Verbinden von zwei, einander überlappende Flächenabschnitte aufweisenden Bauteilen durch Laserstrahl.

Nachdem das Schneiden von Werkstoffen mit Hilfe des Laserstrahls Mitte der siebziger Jahre zum ersten Mal industriell eingesetzt wurde, folgte zehn Jahre später auch das Laserschweissen. Sowohl beim Laser- Schneiden als auch beim Laser- Schweissen wird der Umstand genutzt, dass die absorbierte Laser- Lichtleistung größer ist als die durch Wärmeleitung in dem bearbeiteten Material abtransportierbare Leistung. Somit kommt es in dem bearbeiteten Werkstoff infolge lokaler Überhitzung zu einer Verflüssigung. Im Gegensatz zum Laser- Schneiden wird beim Laser- Schweissen die Schmelze aber nicht mit dem Ziel der Trennung des Werkstücks ausgetrieben sondern verbleibt in der Nahtfuge und erstarrt dort Das auf die Werkstückoberfläche fokussierte Laser- Licht stellt eine extrem gebündelte Energiequelle dar. Diese bewirkt eine Aufschmelzung in einem kleinen, lokal begrenzten Gebiet, wodurch zum einen sehr schmale Nähte von einigen zehntel Millimetern und andererseits auch sehr tiefe Nähte von einigen Zentimetern mit einem Tiefen- zu Breiten- Verhältnis bis zu 10 realisiert werden können.

Mit Hilfe des Laser- Schweissens können auch Werkstoffe mit stark unterschiedlichen Schmelztemperaturen oder Werkstoffdicken miteinander verschweisst werden. Dieses wiederum ermöglicht beispielsweise im Karosserie- oder Fahrzeugbau eine gezielte Verstärkung der beanspruchten Zonen und daher eine erhebliche Materialeinsparung bzw. Gewichtsreduzierung.

Um aber die Vorteile des Laser- Schweissens nutzen zu können, werden an die Werkstückvorbereitung, wie Nahtvorbereitung oder Positionierung zum Laserstrahl, bestimmte Anforderungen gestellt. Aufgrund der geringen Nahtbreite, die ja ein wesentlicher Vorteil des Laserschweissens ist, ist eine relativ exakte Positionierung der Fügestelle gegenüber dem Laser- Brennfleck erforderlich. Als Richtwert soll der Strahl genauer als etwa ein Drittel der Nahtbreite an der schmalsten Nahtquerschnittsfläche positioniert werden. Dies kann entweder durch eine sehr gute Vorfertigung mit geringen Bauteiltoleranzen oder durch einen entsprechenden Nahtfindungssensor mit Positionsregelung erzielt werden.

Dem in der Laserschweisstechnik kundigen Fachmann ist es deshalb unter laserschweissgerechtem Konstruieren bekannt, die miteinander zu verschweissenden Bauteile kraftschlüssig zu fixieren, bevor sie miteinander verschweisst werden können. So ist es üblich, die miteinander zu verschweissenden Bauteile durch Klemmen zu verbinden und nach dem Schweissen die Klemmen wieder zu lösen. Das Positionieren mit Hilfe von Klemmen hat aber Nachteile, denn nicht immer sind die Bauteile für das Anbringen von Klemmen ausreichend zugänglich noch ist gewährleistet, dass die Klemmkraft immer mit ausreichender Stärke aufgebracht wird, um die zu verschweissenden Bauteile auch ausreichend nahe aneinanderzufügen. Auch ist es beim Laserschweissen nicht üblich, die miteinander zu verbindenden Bauteile vor dem Verschweissen zu heften, wie das beispielsweise beim Elektro- oder Autogenschweissen üblich ist.

Daraus ergibt sich die Aufgabe für die vorliegende Erfindung, die Bauteile vor dem Laserschweissen in ihrer jeweiligen Position absolut genau und sicher zu fixieren, um die Vorteile der Laserschweissung uneingeschränkt zu gewährleisten.

Diese Aufgabe wird erfindungsgemäß dadurch gelöst, dass man die Bauteile vor dem Laserschweissen an zumindest einem der überlappenden Flächenabschnitte mittels Schrauben oder Niete für den Schweissvorgang formschlüssig zueinander fixiert und anschließend durch Laserstrahl miteinander verschweisst. Mitunter ist schon die Fixierung an einem einzigen überlappenden Flächenabschnitt ausreichend; vorteilhafter aber ist es, wenn die Bauteile für den Schweissvorgang an mehreren überlappenden Flächenabschnitten fixiert werden können.

Im einfachsten Falle werden die Bauteile miteinander verschraubt. Es hat sich aber auch als vorteilhaft erwiesen, wenn man die Bauteile miteinander vernietet,
wobei vorausgesetzt wird, dass der Niet nach dem Verschweissen nicht mehr entfernt wird. Insbesondere beim Karosseriebau oder beim Bau von Eisenbahnfahrzeugen wird das Vemieten mit Blindnieten bevorzugt. Weitere Vorteile ergeben sich aus den einzelnen Unteransprüchen.

Nachfolgend wird die Erfindung an zwei Ausführungsbeispielen näher erläutert. Es zeigen jeweils maßstäblich die
- Fig.1 eine erste Verbindung in der Draufsicht,
- Fig.2 einen Längsschnitt durch die erste Verbindung entlang der Linie II-II,
- Fig.3 eine zweite Verbindung in der Draufsicht und
- Fig.4 die zweite Verbindung in der Seitenansicht.

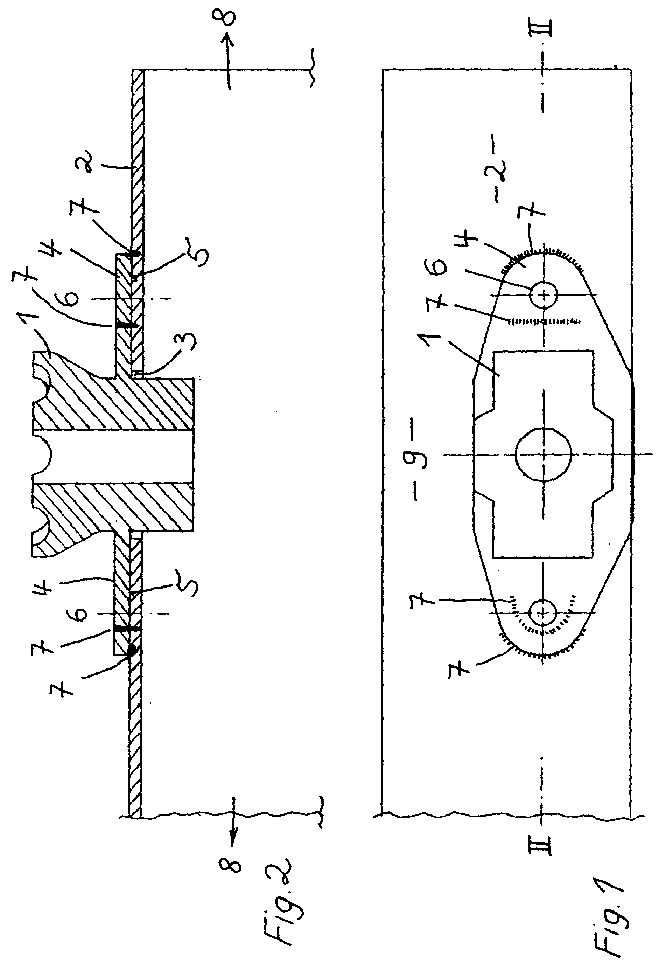

Nach den Figuren 1 und 2 wird ein Formteil 1 in ein langgestrecktes Bauteil 2 eingelassen und beide Teile 1 und 2 werden miteinander durch Laserschweissen verbunden. Bei dem langgestreckten Bauteil 2 handelt es sich um ein hohles Leichtbauprofil. Beispielsweise besteht das Formteil 1 aus Feinguss und das Leichtbauprofil 2 aus Stahl. Das Leichtbauprofil 2 weist einen randseitigen Ausschnitt 3 auf, in welchen das Formteil 1 eingelassen ist. Das Formteil 1 weist zwei flache seitliche Flansche 4 auf, die auf dem an den Ausschnitt 3 angrenzenden Flächenabschnitt 5 des Leichtbauprofils 2 flach aufliegen. Die beiden Bauteile 1 und 2 überlappen einander also auf den gemeinsamen Flächenabschnitten 5. Auf diesen Flächenabschnitten 5 sind sie zunächst durch Nieten 6 in ihrer gegenseitigen Lage zueinander fixiert und darüber hinaus auch fest miteinander verbunden. Zusätzlich aber sind die beiden Bauteile 1 und 2 auch entlang der Naht 7 durch Laserschweissen miteinander fest verbunden.

Durch die Laserschweissung 7 ergibt sich ein besondere Vorteil. Unter der Annahme, dass in Richtung der Pfeile 8 große Zugkräfte auf das Leichtbauprofil 2 wirken, bedeutet der Ausschnitt 3 eine Materialschwächung. Die Folge davon ist, dass sich unter der Wirkung der Zugkräfte 8 in dem geschwächten Bereich die Zugspannung beträchtlich erhöht. Diese Erhöhung kann nicht allein durch die Niete 6 auf gefangen werden. Mit Hilfe der Laserschweissung 7 aber kann eine umlaufende Naht erzeugt werden, welche die ursprüngliche Zugfestigkeit des Leichtbauprofils 2 wieder nahezu vollständig herstellt.

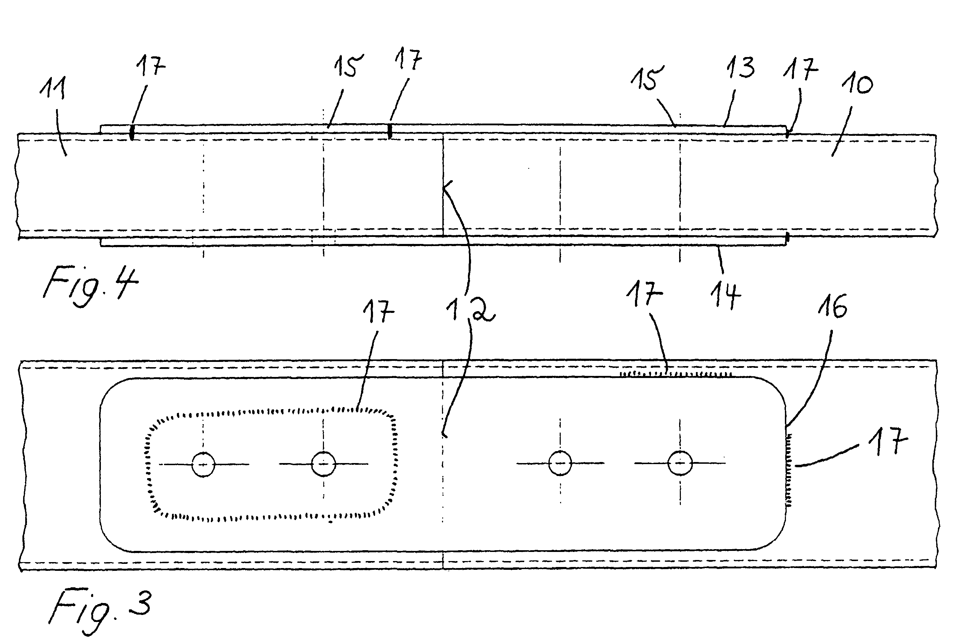

In dem zweite Ausführungsbeispiel der Figuren 3 und 4 sind zwei rechteckige dünnwandige Leichtbauprofile 10 und 11 an ihren Stirnseiten 12 miteinander verbunden. In den an die Stirnseiten 12 angrenzenden Flächenabschnitten werden die beide Leichtbauprofile 10 und 11 durch zwei einander gegenüberliegende Blechstreifen 13 und 14 überlappt. Die Leichtbauprofile 10 und 11 sind mit den Blechstreifen 13 und 14 zunächst durch Niete 15 fest verbunden. Zusätzlich zur Vernietung ist entlang den äußeren Rändern 16 der beiden Blechstreifen 13 und 14 eine umlaufende Laserschweissnaht 17 gelegt, von der in der Fig.3 ein kurzer Abschnitt angedeutet ist. Beim Verschweissen macht man sich den Vorteil zu Nutze, dass man den Laserstrahl entlang der Kante 16 führen kann.

### Ziffernverzeichnis

- 1: Formteil
- 2: Leichtbauprofil
- 3: Ausschnitt
- 4: seitlicher Flansch
- 5: Flächenabschnitt
- 6: Niet
- 7: Naht
- 8: Zugkraft
- 9: geschwächter Querschnittsbereich
- 10: Leichtbauprofil
- 11: Leichtbauprofil
- 12: Stimseite
- 13: Blechstreifen
- 14: Blechstreifen
- 15: Niet
- 16: umlaufender Rand
- 17: Laserschweissnaht

## Patentansprüche

1. Verfahren zum Verbinden von zwei einander überlappende Flächenabschnitte aufweisenden metallischen Bauteilen durch Laserstrahl, **dadurch gekennzeichnet, dass** man die Bauteile (1, 2; 10, 11) vor dem Laserschweissen an zumindest einem der überlappenden Flächenabschnitte (5) mittels Schrauben oder Niete (6, 15) für den Schweissvorgang formschlüssig zueinander fixiert und anschließend durch Laserstrahl miteinander verschweisst.

2. Verfahren nach Anspruch 1, **dadurch gekennzeichnet, dass** ein Formteil (1) aus Feinguss als erstes Bauteil und ein dünnwandiges Leichtbauprofil (2) mit rechteckförmigem Querschnitt als zweites Bauteil, wobei das Formteil (1) in einen randseitigen Ausschnitt (3) des Leichtbauprofils (2) hineinragt, vor dem Laserschweissen an zumindest einem ihrer überlappenden Flächenabschnitte (5) durch die Schrauben oder Niete (6, 15) formschlüssig zueinander fixiert und anschließend durch Laserstrahl miteinander verschweisst werden.

3. Verfahren nach Anspruch 1, **dadurch gekennzeichnet, dass** zwei die beiden Bauteile bildende dünnwandige Leichtbauprofile (10, 11) mit demselben rechteckförmigen Querschnitt, deren Stirnseiten zusammenstoßen, vor dem Laserschweissen mittels Blechstreifen (13, 14), die sich auf gegenüberliegenden Außenseiten über angrenzende Flächenabschnitte beider Leichtbauprofile (10, 11) erstrecken, und durch die Schrauben oder Niete (6, 15) formschlüssig zueinander fixiert und anschließend durch Laserstrahl miteinander verschweisst werden.

## Claims

1. Method of connecting two metallic components, having surface sections which overlap one another, by laser beam, **characterized in that**, before the laser welding, the components (1, 2; 10, 11), for the welding operation, are fixed relative to one another in a positive-locking manner at least at one of the overlapping surface sections (5) by means of screws or rivets (6, 15) and are then welded to one another by laser beam.

2. Method according to Claim 1, **characterized in that** a formed part (1) consisting of a precision casting, as first component, and a thin-walled lightweight profile (2) of rectangular cross section, as second component, the formed part (1) projecting into a marginal cutout (3) of the lightweight profile (2), are fixed relative to one another in a positive-locking manner before the laser welding at least at one of their overlapping surface sections (5) by the screws or rivets (6, 15) and are then welded to one another by laser beam.

3. Method according to Claim 1, **characterized in that** two thin-walled lightweight profiles (10, 11) which form the two components and have the same rectangular cross section and whose end faces abut are fixed relative to one another in a positive-locking manner before the laser welding by means of sheet-metal strips (13, 14), which extend on opposite outer sides over adjoining surface sections of both lightweight profiles (10, 11), and by the screws or rivets (6, 15) and are then welded to one another by laser beam.

## Revendications

1. Procédé d'assemblage par faisceau laser de deux éléments métalliques ayant des parties de surface qui se recouvrent, **caractérisé en ce que** l'on immobilise l'un par rapport à l'autre, à complémentarité de formes, les éléments (1, 2, ; 10, 11) avant le soudage par laser sur au moins l'une des parties (5) de surface qui se recouvrent au moyen de vis ou de rivets (6, 15) pour l'opération de soudage et on les visse ensuite entre eux par faisceau laser.

2. Procédé suivant la revendication 1, **caractérisé en ce que** l'on immobilise entre eux à complémentarité de formes un élément (1) conformé constitué d'une pièce coulée de précision comme premier élément et un profilé (2) léger à paroi mince, de section transversale rectangulaire, comme deuxième élément l'élément (1) conformé faisant saillie dans une partie (3) marginale du profilé (2) léger avant le soudage par laser sur au moins l'une de leurs parties (5) de surface à recouvrement par des vis ou des rivets (6, 15) et ensuite on les soude entre eux par faisceau laser.

3. Procédé suivant la revendication 1, **caractérisé en ce que** l'on immobilise l'un par rapport à l'autre à complémentarité de formes deux profilés (10, 11) légers à parois minces formant les deux éléments et de même section transversale rectangulaire, dont les côtés frontaux sont bout à bout avant le soudage par laser au moyen de bandes (13, 14) de tôle qui s'étendent sur des côtés extérieurs opposés au-dessus de parties de surface adjacentes des deux profilés (10, 11) légers, et par les vis ou les rivets (6, 15) et on les soude ensuite entre eux par faisceau laser.
